# EUROPÄISCHE PATENTSCHRIFT

(11) **EP 0 472 252 B1**
(45) Veröffentlichungstag und Bekanntmachung des Hinweises auf die Patenterteilung: **16.10.1996**
(21) Anmeldenummer: 91250225.9
(22) Anmeldetag: 10.08.1991
(51) Int. Cl.: G01N 29/04, G01N 29/10

(54) **Ultraschallprüfvorrichtung**
Ultrasonic test apparatus
Dispositif de contrôle à ultrasons

(30) Priorität: 17.08.1990 DE 4026458
(43) Veröffentlichungstag der Anmeldung: 26.02.1992
(73) Patentinhaber: MANNESMANN Aktiengesellschaft, 40027 Düsseldorf (DE); KRAUTKRÄMER GmbH & Co., D-50354 Hürth (DE)
(72) Erfinder: Schoenen, Manfred, W-4020 Mettmann (DE); Haacke, Harri, W-4030 Ratingen-Vokarday (DE); Bäthmann, Hans-Joachim, W-4130 Moers 2 (DE); Karbach, Bernhard, W-5042 Erfstadt-Friesheim (DE); Kauth, Gerd, W-5000 Köln 60 (DE); Prause, Reinhard, W-5205 St. Augustin (DE); Patzka, Ottokar, W-5042 Erfstadt-Liblar (DE)
(74) Vertreter: Presting, Hans-Joachim, Dipl.-Ing.

(56) Entgegenhaltungen:
- DE-A- 2 740 106
- DE-A- 2 840 456
- FR-A- 2 103 940
- US-A- 3 868 847
- US-A- 4 899 590
- US-A- 4 907 455

## Beschreibung

Die Erfindung betrifft eine US-Prüfvorrichtung zur zerstörungsfreien Prüfung nach der Impuls-Echo-Methode eines relativ dazu sich bewegenden Werkstückes gemäß dem Gattungsbegriff des Anspruches 1.

Die DE-OS 27 40 106 offenbart eine US-Prüfvorrichtung zur zerstörungsfreien Prüfung metallischer Gegenstände mit einem Prüfkopfträger, an dem drei Prüfköpfe angeordnet sind, deren Schallstrahlachsen sich auf der Innenseite des Werkstückes in einem Punkt schneiden und die zur Ankopplung an die Werkstücksoberfläche mit Flüssigkeitskopplersystemen ausgestattet sind. Die Prüfköpfe sind in einem Abstand zueinander am Trägerrahmen einstellbar befestigt und jedem Prüfkopf ist separat eine einen Kanal bildende Vorlaufstrecke zugeordnet. Die zwei außenliegenden Prüfköpfe arbeiten nach dem Impuls-Echo-System, wobei ein Prüfkopf die Funktion des Senders und der andere die Funktion des Empfängers übernimmt. Da die Intensität des empfangenen Signals sehr stark von der Oberflächengeometrie abhängig ist, soll durch den dritten zwischen den beiden außenliegenden Prüfköpfen angeordneten Prüfkopf mittels einer Schallschwächungsmessung die Ausrichtung der beiden außenliegenden Prüfköpfe entsprechend der Oberflächengeometrie des zu prüfenden Werkstückes erfolgen.

Aus der DE-OS 27 51 810 ist eine US-Prüfvorrichtung zum zerstörungsfreien Prüfen von Schweißnähten bekannt, bei der in einer Prüfspinne insgesamt 6 Prüfköpfe angeordnet sind, deren Schallstrahlen sich in einem Punkt schneiden. Die schallübertragende Ankoppelung erfolgt durch Zuführen von Wasser in die Berührungsebene. Nachteilig bei dieser Anordnung ist, daß das Koppelmedium in unkontrollierter Weise der Prüfvorrichtung zugeführt wird und dementsprechend der Aufwand für die Ankoppelkontrolle sehr hoch ist. Außerdem ist wegen des taktweisen Abfragens der einzelnen Prüfköpfe die Prüfleistung sehr niedrig, da immer erst das Echo des eingegebenen Schallimpulses abgewartet werden muß, bevor der nächste Schallimpuls eingeschossen werden kann. Ein weiterer wesentlicher Nachteil besteht darin, daß die Prüfköpfe in Einzel-Halterungen eingebaut sind, die bei Toleranzen des Prüfteiles oder bei Transport- und Führungstoleranzen ihre Position zueinander verändern.

Aufgabe der Erfindung ist es, eine verbesserte US-Prüfvorrichtung anzugeben, mit der weitgehend störunanfällig mit hoher Prüfleistung geprüft werden kann und die für unterschiedliche Prüfaufgaben und Formen des Prüflings schnell und einfach anpaßbar ist.

Diese Aufgabe wird mit den im Anspruch 1 angegebenen Merkmalen gelöst. Vorteilhafte Weiterbildungen ergeben sich aus den Unteransprüchen.

Erfindungswesentlich ist, daß der zentrale, das Fließmedium führende Kanal der Kammer in mehrere separate Kanäle aufgeteilt ist, wobei die Anzahl der Kanäle der Anzahl der angeordneten Prüfköpfe entspricht und die Achsen der Kanäle mit der jeweiligen Schallstrahlachse des Prüfkopfes fluchten. Durch die Bildung einer über eine bestimmte Länge der Kammer sich erstreckenden, das Fließmedium führenden separaten Vorlaufstrecke in Form eines Kanals für jeden Prüfkopf wird die Entstehung vagabundierender Schallimpulse weitgehend unterdrückt. Damit kann das verwertbare Signal-Rauschverhältnis wesentlich gesteigert und insgesamt mit höherer Pulsfolgefrequenz gearbeitet werden. Weiterhin werden durch die separaten Vorlaufstrecken die Ankoppelverhältnisse verbessert, da das Koppelmedium besser geführt wird. Ein weiterer wesentlicher Aspekt der Erfindung ist darin zu sehen, daß beispielsweise bei einer Prüfung für Rohre oder Knüppel in Drei- oder Neun-Uhr-Lage, insbesondere in Zwölf-Uhrlage dafür gesorgt wird, daß die möglicherweise in den ungünstigen Bereichen sich sammelnden Luftblasen durch die Führung des Koppelmediums weggespült werden. Dazu sind der Prüfkopfträger und die Kammer so zueinander angeordnet, daß im alle Prüfköpfe und Eintrittsöffnungen der Kanäle einschließenden Bereich ein nach außen abgedichteter, das Fließmedium führender Spalt gebildet wird. Die Austrittsöffnungen der symmetrisch verteilt angeordneten Anschlußkanäle münden in der Randzone dieses wasserführenden Spaltes.

Damit wird sichergestellt, daß das gesamte Spaltvolumen vollständig mit dem Koppelmedium gefüllt ist und der Druck sowie die Strömung gleichmäßig sind. Um sicherzustellen, daß es zu keiner Ansammlung von Luftblasen an der ungünstigsten Stelle kommt, ist außerdem vorgesehen, daß in der größten Entfernung von der Stirnfläche der Kammer ein Entlüftungskanal im Prüfkopfträger angeordnet ist, der mit dem das Fließmediums führenden Spalt verbunden ist. Damit die Prüfvorrichtung universell für verschiedene Uhr-Lagen einsetzbar ist, werden mehrere Entlüftungsöffnungen im Prüfkopfträger angeordnet, die wahlweise verschlossen oder geöffnet werden können. Damit es zu keiner störenden Luftblasenansammlung im Bereich der Prüfköpfe selbst kommt, werden die Prüfköpfe in den Bohrungen des Prüfkopfträgers so befestigt, daß die Stirnfläche des Prüfkopfes mindestens mit der Bohrungsaustrittsfläche bündig abschließt, besser noch, darüber hinausragt.

Die Anzahl und Anordnung der Prüfköpfe ist im Prüfkopfträger innerhalb gewisser Grenzen frei wählbar. Die eine Grenze ist dadurch gegeben, daß man aus Gründen der Handhabbarkeit bestrebt ist, den Prüfkopfträger so klein wie möglich zu machen, damit er beispielsweise bei einer Prüfung von Rohren oder Stäben auch als Rotationskopf Verwendung finden kann. Die andere Grenze ergibt sich aus den geometrischen Gegebenheiten der gewählten Schwingergröße und den physikalischen Charakteristiken wie Frequenz und Nahfeldlänge.

In einer ersten einfachen Ausführungsform werden mindestens zwei Prüfköpfe angeordnet. Diese Ausführungsform entspricht im Prinzip zwei getrennt arbeitenden Prüfköpfen, nur mit dem Unterschied, daß die Schallstrahlen sich im Bereich des Werkstückes in einem Punkt schneiden. Der Vorteil besteht darin, daß alle erhältlichen Informationen von ein und demselben Ort stammen und keine Aufwendungen elektronischer Art notwendig sind, um die empfangenen Signale der einzelnen Prüfköpfe ortsgetreu miteinander verknüpfen zu müssen.

Um die internationalen Prüfbedingungen erfüllen zu können, ist es erforderlich, auch in der entgegengesetzten Einschallrichtung zu prüfen, um sicherzustellen, einen mit seiner Reflexionsfläche ungünstig zur ursprünglichen Einschallrichtung liegenden Fehler ebenfalls aufzuspüren. Dies kann man in einfacher Weise dadurch realisieren, daß man die bereits beschriebene Prüfvorrichtung um 180 Grad schwenkt und die Prüfung wiederholt. Da man aus Gründen der Prüfzeit und des Materialflusses einen zweifachen Durchlauf des Werkstückes möglichst vermeiden möchte, wird weiterbildend vorgeschlagen unmittelbar neben dem erstgenannten Prüfkopfträger die Anordnung eines weiteren Prüfkopfträgers vorzusehen. Bei diesem wäre die Einschallrichtung der angeordneten Prüfköpfe entgegengesetzt zu der des ersten Prüfkopfträgers. Mit einer solchen Anordnung könnten alle bekannten Prüfanforderungen erfüllt werden und ein Parallelbetrieb aller Prüfköpfe wäre möglich. Nachteilig dabei ist, daß der apparative Aufwand relativ groß ist, da zwei getrennte Prüfkopfträger genau einjustiert und gehalten werden müssen und die zwei sich bildenden Prüforte weit auseinanderliegen, was wiederum einen elektronischen Korrelationsaufwand erforderlich macht.

Aus diesem Grunde wird vorgeschlagen, in einem Prüfkopfträger vorzugsweise insgesamt neun Prüfköpfe anzuordnen. Mit Ausnahme des zentral angeordneten Prüfkopfes sind die übrigen 8 Prüfköpfe mit einem Versatz von je 45 Grad kreisförmig bzw. sternförmig um den zentralen Prüfkopf angeordnet. Bei dieser Anordnung werden beispielsweise die Prüfköpfe aufgeteilt in ein Prüfkopfpaar für die Längs- und eines für die Querfehlerprüfung sowie zwei Prüfkopfpaare für die Schrägfehlerprüfung. Der zentral angeordnete Prüfkopf wird vorzugsweise für die Wanddicken- und Dopplungsprüfung verwendet. Er dient gleichzeitig auch als Ankoppelkontrolle. Bei dieser Anordnung liegen bei allen Prüfkopfpaaren die zwei zusammenarbeitenden Prüfköpfe genau einander, gegenüber. Vorteilhaft dabei ist, daß es für alle Prüfköpfe nur einen gemeinsamen Prüfort gibt, so daß der bisher übliche elektronische Aufwand für die ortsgetreue Zuordnung der anfallenden Signale entfallen kann. Der gemeinsame Prüfort kann dabei wahlweise auf der äußeren Oberfläche des Prüflings oder auf der Rückwand liegen. Die erstgenannte Variante hat den Vorteil, daß die Prüfung in einem weiten Bereich unabhängig von der Abmessung des Prüflings ist. Dieser Bereich wird aber durch die Brechungsverhältnisse des Ultraschalls im Werkstück begrenzt, da ab einer bestimmten Dicke die verwendbare Schallstrahlkeule nicht mehr die Rückwand erreicht. Dann muß der Schallstrahlwinkel geändert werden, um auch Werkstücke mit dickerer Wand prüfen zu können. Es gibt alternativ dazu auch die Möglichkeit den gemeinsamen Prüfort auf die Rückwand zu legen. Dies hat den Nachteil, daß für jede Dicke eine andere Einstellung erforderlich ist. Diese Prüforteinstellung wird man also deshalb immer nur dann anwenden, wenn es sich um die Prüfung von großen Losen der immer gleichen Abmessung handelt. Der Vorteil der letztgenannten Prüforteinstellung ist darin zu sehen, daß auch ungünstig liegende Innenfehler mit hoher Wahrscheinlichkeit sicher detektiert werden. Bei bestimmten Prüfaufgaben kann es auch zweckmäßig sein, den gemeinsamen Prüfort im Erstreckungsbereich der Werkstückdicke, d. h. zwischen äußerer Oberfläche und Rückwand anzuordnen.

Die vorher beschriebene kreis- bzw. sternförmige Anordnung der Prüfköpfe hat durch die Bildung von Paaren einandergegenüberliegender Prüfköpfe aber den Nachteil, daß die aufeinander zugerichteten Schallbündel sich gegenseitig beeinflussen, da durch die nicht vermeidbare Reflektion an der Oberfläche des Prüflings Schallimpulse des einen Prüfkopfes in den gegenüberliegenden Prüfkopf gelangen können. Aus diesem Grunde wird alternativ vorgeschlagen, bei der Anordnung von mindestens drei Prüfköpfen ein zusammenarbeitendes Prüfkopfpaar versetzt anzuordnen. Dabei soll generell die Bedingung gelten, daß die Anzahl der Prüfköpfe immer größer ist als die Anzahl der gebildeten Prüforte. Die Bildung nur eines einzigen gemeinsamen Prüfortes wird bei dieser Konstellation aufgegeben und mindestens zwei Prüforte gebildet, wobei der Abstand zwischen den beiden Prüforten so gering wie möglich sein soll. Der erforderliche Abstand einandergegenüberliegender Paare von Prüfköpfen hängt von der Schwingergröße, der Frequenz und der sich bildenden Schallfeldkeule ab und beträgt beispielsweise das (n-1)fache des Durchmessers der Prüfköpfe, wobei n die Anzahl der gebildeten Prüforte ist. Die Vielzahl der Möglichkeiten der Anordnung der Prüfköpfe soll an dieser Stelle nicht im einzelnen erörtert werden, wesentlich ist nur, daß es ein Kompromiß ist zwischen der Bildung nur eines Prüfortes und der Nichtbeeinflussung der paarig zusammenarbeitenden Prüfköpfe. Für die Prüfleistung hat das zur Konsequenz, daß bei einer Anordnung von versetzt einander gegenüberliegenden Prüfkopfpaaren ein Parallelbetrieb möglich ist und damit die Pulsfolgefrequenz entsprechend hoch sein kann. Bei der Bildung nur eines gemeinsamen Prüfortes ist zur Ausschaltung der störenden Beeinflussung der aufeinander zugerichteten Schallstrahlen nur ein getakteter Sendebetrieb möglich, was die Pulsfolgefrequenz entsprechend erniedrigt.

Zur Erhöhung der schnellen und einfachen Anpassung an unterschiedliche Prüfaufgaben wird weiterbildend vorgeschlagen, die Kammer als Buchse auszubilden, in der ein mit den das Fließmedium führenden Kanälen versehener Einsatz auswechselbar angeordnet ist. Dies ermöglicht die vorherige Herstellung verschiedener Einsätze, die dann bezüglich des Querschnittes und der Neigung ihrer Kanäle den unterschiedlichen Prüfaufgaben angepaßt sind. Eine genaue Justierung der Prüfköpfe wird dadurch erleichtert, daß diese im Prüfkopfträger in Achsrichtung verstellbar befestigt sind. Außerdem ist es möglich, durch entsprechend exzentrische Buchsen, die in den Prüfkopfträger einsetzbar sind, den vorher bestimmten Schielwinkel des Prüfkopfes durch Drehen der Buchse weitgehend auszugleichen. Um die Verteilung des Fließmediums zu optimieren sind beispielsweise insgesamt vier Anschlußbohrungen vorgesehen, die symmetrisch im Prüfkopfträger verteilt sind. Im Falle der Verwendung des erfindungsgemäßen Prüfkopfträgers für eine Rohrprüfung ist die Vorrichtung kardanisch in einer Halterung angeordnet, so daß sie in einfacher Weise sich den Krümmungsverhältnissen anpassen kann. Weiterhin sind die bereits bekannten prismatisch ausgebildeten Verschleißsohlen quer zur Achse des Prüflings verschiebbar mit der Prüfvorrichtung verbunden. Dadurch wird die Anpassung der Führungsmechanik an unterschiedliche Durchmesser der zu prüfenden Rohre vereinfacht. Bei einem feststehendem Prüfkopfträger würde sich das Rohr schraubenlinienförmig bewegen, um eine vollständige Überdeckung zu gewährleisten. Alternativ kann sich das Rohr auch ohne Drehung um seine Längsachse bewegen, wenn der Prüfkopfträger um das Rohr rotiert. Bei einem weiteren Prüfverfahren wird der Prüfkopfträger entlang eines auf der Stelle drehenden Rohres gefahren. Um die Prüfleistung entsprechend zu erhöhen, wird außerdem vorgeschlagen 4 Prüfkopfträger um 90 Grad versetzt oder hintereinander in einem Rahmen anzuordnen, der zur Justierung und Umbau in die Prüflinie ein- und ausgeschwenkt werden kann.

In der Zeichnung wird anhand schematischer Darstellungen und eines Ausführungsbeispieles die erfindungsgemäße Vorrichtung näher erläutert.

Es zeigen:
- Figur 1: die schematische Darstellung des gemeinsamen Prüfortes - äußere Oberfläche des Werkstückes
- Figur 2: die schematische Darstellung des gemeinsamen Prüfortes - Rückwand des Werkstückes
- Figur 3: in einer Draufsicht die schematische Anordnung zweier Prüfkopfträger I,II mit je einem gemeinsamen Prüfort und den entsprechenden gegenüberliegenden Schalldämpfungsbohrungen
- Figur 4: in einer Draufsicht die schematische Darstellung eines kreisrunden Prüfkopfträgers mit 9 Prüfköpfen
- Figur 5: in einer Draufsicht die schematische Darstellung eines ovalen Prüfkopfträgers mit 9 Prüfköpfen
- Figur 6: einen Querschnitt durch ein Ausführungsbeispiel einer Prüfvorrichtung gemäß der in Fig. 4 dargestellten Anordnung
- Figur 7: eine Draufsicht des Prüfkopfträgers
- Figur 8: die schematische Darstellung einer Ausführung zur Verhinderung der Störreflexionen

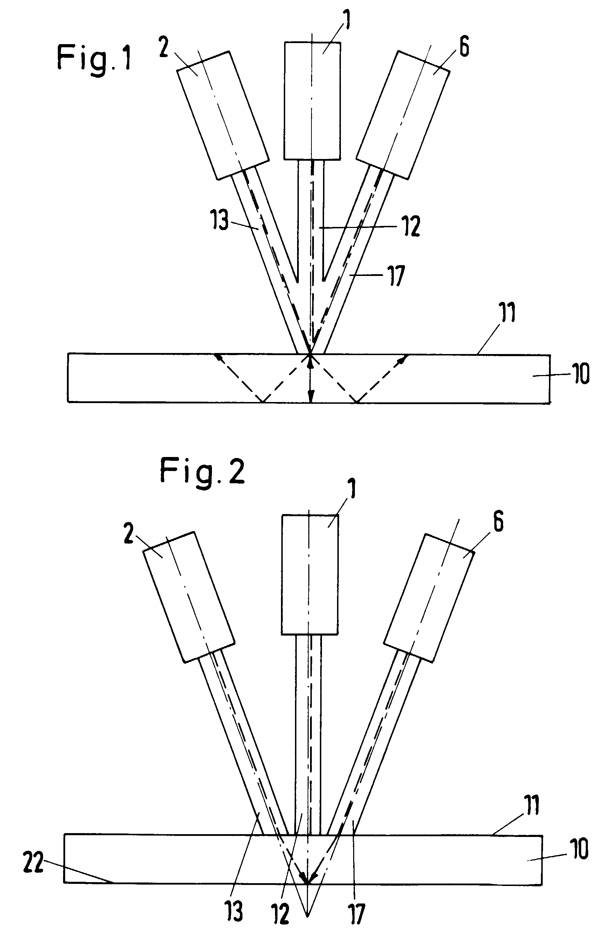

Figur 1 zeigt in einer schematischen Darstellung eine erfindungsgemäße Anordnung mit drei in einer Ebene liegenden Prüfköpfen 1,2,6, deren Schallstrahlen (gestrichelte Linien) so auf das zu prüfende Werkstück 10 gerichtet sind, daß der gemeinsame Prüfort auf der äußeren Oberfläche 11 des Werkstückes 10 gebildet wird. Die Ankopplung erfolgt über ein Fließmedium z. B. Wasser, das erfindungsgemäß durch getrennt angeordnete Kanäle 12,13,17 geführt wird, wobei diese hier nur skizzenhaft angedeutet sind. Die Achsen (strichpunktierte Linien) der Kanäle 12,13,17 fluchten mit den Schallstrahlen und schneiden sich in einem Punkt unmittelbar auf der Oberfläche 11 des Werkstückes. In Figur 2 ist ebenfalls schematisch eine vergleichbare Anordnung wie in Figur 1 dargestellt, nur mit dem Unterschied, daß der gemeinsame Prüfort auf der Rückwand 22 des Werkstückes 10 gebildet wird. Bei der Prüfung eines Rohres würde dies der Innenwand entsprechen. Bei dieser Anordnung fluchten zwar ebenfalls die Schallstrahlen (gestrichelte Linien) mit den Achsen (strichpunktierte Linien) der Kanäle 12,13,17, aber der gedachte Schnittpunkt der Achsen liegt außerhalb des Werkstückes 10, während sich die gebrochenen Schallstrahlen in einem Punkt auf der Rückwand 22 schneiden. Zwischen diesen beiden Extrempositionen gemäß Figur 1 und 2 ist auch die Bildung eines gemeinsamen Prüfortes irgendwo inmitten der Wand des Werkstückes 10 vorstellbar.

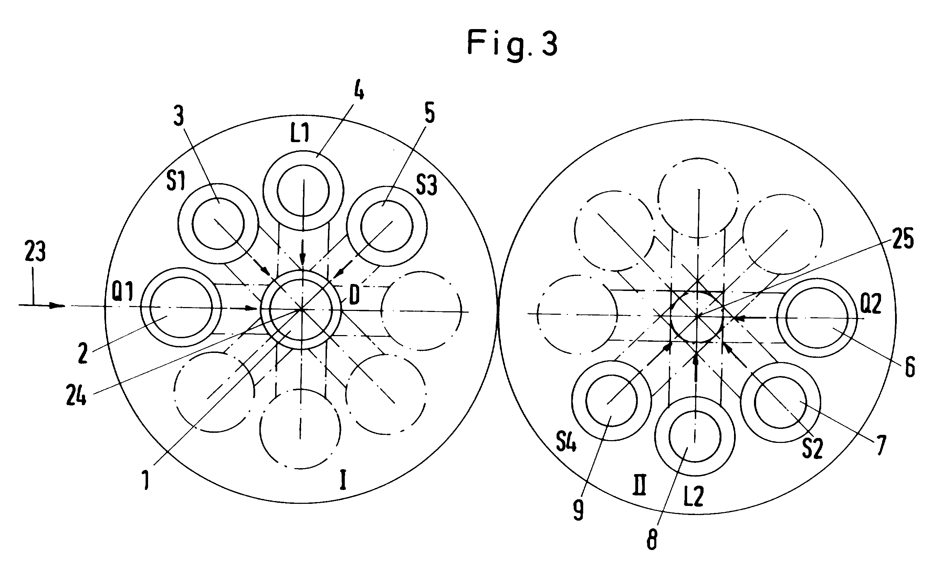

In einer Draufsicht ist in Figur 3 schematisch die Anordnung zweier getrennter Prüfkopfträger I, II dargestellt. Für die Funktion der einzelnen Prüfköpfe 1 bis 9 und ihrer jeweils gegenüberliegenden Schalldämpfungsbohrungen werden für die Figuren 3, 4 und 5 folgende Abkürzungen verwendet.
- DW =: Dopplungsprüfung und Wanddickenprüfung (Senkrechteinschallung)
- Q1,Q2 =: Querfehlerprüfung
- L1,L2 =: Längsfehlerprüfung
- S1-S4 =: Schrägfehlerprüfung

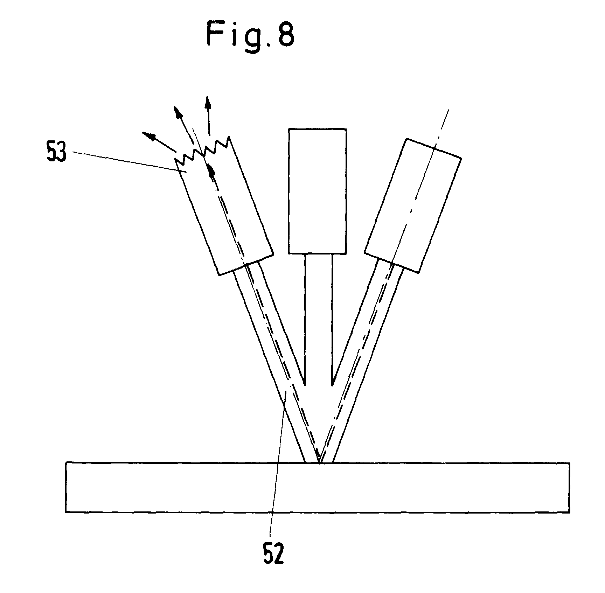

Mit dem dick eingezeichneten Pfeil 23 soll die Einlaufrichtung des hier nicht dargestellten Werkstückes gekennzeichnet werden. In einer ersten einfachen Ausführung ist nur ein Prüfkopfträger vorgesehen, der insgesamt drei Prüfköpfe 1,2,4 oder sogar nur zwei Prüfköpfe 2,4 mit den dazugehörigen Schalldämpfungsbohrungen aufweist. Damit könnte in nur einer Einschallrichtung das Werkstück beispielsweise in bezug auf Längs- und Querfehler und bei Hinzunahme des zentral angeordneten Prüfkopfes 1 auf Wanddicke und Dopplung geprüft werden. Außerdem könnte dieser Prüfkopf 1 zusätzlich die Funktion der Ankoppelkontrolle übernehmen. Die Wirkung der zusätzlich angeordneten jeweils gegenüberliegenden Schalldämpfungsbohrungen wird in Figur 8 näher erläutert. Bei einer erweiterten Ausführung würde mindestens noch ein Prüfkopf für die Schrägfehlerprüfung hinzukommen. Im Falle der Anordnung zwei weiterer Prüfköpfe 3,5 für die Schrägfehlerprüfung würde dies dem in Figur 3 dargestellten Prüfkopfträger I entsprechen. Charakteristisch für diesen Prüfkopfträger I ist, daß sich die Schallstrahlen (hier symbolisiert durch die von den Prüfköpfen ausgehenden Pfeilen) in nur einem Punkt 24 (Prüfort) schneiden und mit Ausnahme des zentral angeordneten Prüfkopfes 1 für die Dopplungs- und Wanddickenprüfung die übrigen vier Prüfköpfe 2 - 5 auf einem Kreis im Abstand zum zentralen Prüfkopf 1 angeordnet sind. Da die Schallstrahlen der Prüfköpfe 2 bis 5 mit Schrägeinschallung sich nicht gegenseitig beeinflussen und durch dem jeden Prüfkopf 2,3,4,5 gegenüberliegenden Schalldämpfungskanal eine Eigenstörung verhindert wird, ist ein Parallelbetrieb möglich. Die Verwendung eines solchen Prüfkopfträgers I ist aber nur dann möglich, falls die zu beachtende Prüfvorschrift dem nicht entgegensteht und die Lage und der Typ des am häufigsten vorkommenden Fehlers ziemlich genau bekannt ist.

Die international bekannten Prüfvorschriften schreiben zur sicheren Detektierung von Werkstückfehlern eine Einschallrichtung in zwei entgegengesetzten Richtungen vor. Diese Anforderung kann man in der Weise erfüllen, daß der erstgenannte Prüfkopfträger I um 180 Grad gedreht wird und das Werkstück noch einmal diesen Prüfkopfträger I durchlaufen müßte. Etwas eleganter läßt sich dieses Problem dadurch lösen, daß man unmittelbar neben dem ersten Prüfkopfträger I einen weiteren Prüfkopfträger II anordnet, der eine vergleichbare Anordnung von Prüfköpfen 6-9 aufweist. Der Unterschied zum ersten Prüfkopfträger I besteht darin, daß die Einschallrichtungen an der Prüfköpfe entgegengesetzt liegen. Die Schallstrahlen der Prüfköpfe 6 - 9 des zweiten Prüfkopfträgers II sind vergleichbar wie die des ersten Prüfkopfträgers I gebündelt ausgerichtet, so daß ebenfalls ein gemeinsamer Schnittpunkt 25 (Prüfort) gebildet wird, dessen Entfernung zum erstgenannten Schnittpunkt 24 des ersten Prüfkopfträgers I mindestens eine Durchmesserlänge des Prüfkopfträgers beträgt.

Vorteilhaft bei dieser Ausführung ist, daß die Prüfköpfe 1 - 5 bzw. 6 - 9 jedes Prüfkopfträgers I,II parallel betrieben werden können, da die Schallstrahlen sich nicht gegenseitig stören. Nachteilig ist der Aufwand der erforderlichen Mechanik, um die zwei Prüfkopfträger I,II zu halten und auf eine gemeinsame Achse einjustieren zu können. Ebenso von Nachteil sind die zwei weit auseinanderliegenden Schnittpunkte 24,25 der Schallstrahlen, die eine entsprechende ortsgetreue Korrelation der erhaltenen Signale erforderlich macht.

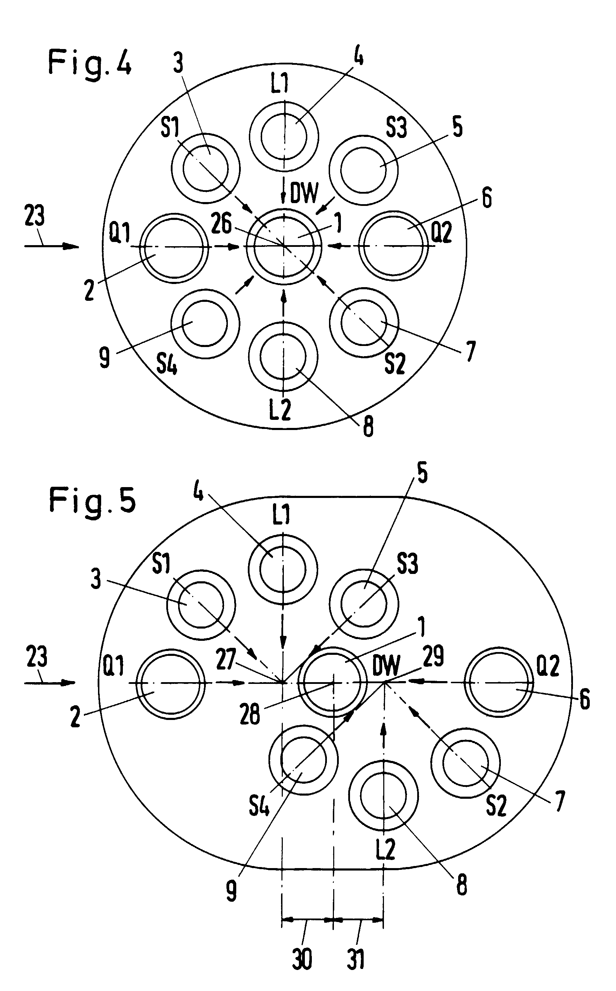

Aufgrund dieser Nachteile wird die in Figur 4 gezeigte Ausführungsform vorgeschlagen, bei der in einem einzigen Prüfkopfträger insgesamt 9 Prüfköpfe 1 - 9 angeordnet sind. Die Schallstrahlen aller Prüfköpfe 1-9 sind so ausgerichtet, daß nur ein einziger Schnittpunkt 26 (Prüfort) gebildet wird, der entsprechend der Darstellung in Figur 1 und 2 wahlweise sich auf der äußeren Oberfläche 11 oder auf der Rückwand 22 des zu prüfenden Werkstückes 10 befindet. Bei dieser dargestellten Anordnung werden Paare von Prüfköpfen gebildet, die bei gleicher Prüffunktion einander gegenüberliegen und deren Schallstrahlen entgegengesetzt gerichtet sind. Beispielsweise bilden die Prüfköpfe 4,8 ein Prüfkopfpaar für die Längsfehlerprüfung, wobei in Einlaufrichtung 23 gesehen der rechtsliegende Prüfkopf 8 entgegen dem Uhrzeigersinn und der linksliegende Prüfkopf 4 im Uhrzeigersinn einschallt. Vorteilhaft bei dieser Anordnung ist die Möglichkeit, den Prüfkopfträger kompakt zu bauen, so daß für den Halterahmen und für die Führung nur wenig Platz beansprucht wird. Außerdem kann er in dieser kompakten Form auch als Rotationsprüfkopf verwendet werden. Es wird nur ein gemeinsamer Schnittpunkt 26 (Prüfort) gebildet, so daß alle Informationen von ein und derselben Stelle stammen und keine ortsgetreue Korrelation erforderlich ist. Von Nachteil ist, daß eine störende Beeinflussung der Schallstrahlen der einander gegenüberliegenden Prüfköpfe sich nicht vermeiden läßt, so daß ein Parallelbetrieb aller Prüfköpfe im Regelfall nicht möglich ist. Diesem Problem kann man durch die Anwendung des Multiplex-Verfahrens abhelfen, wobei aber im Hinblick auf die Prüfleistung die angestrebte hohe Pulsfolgefrequenz entsprechend verringert werden muß.

Eine alternative Ausführungsform ist in Figur 5 dargestellt. Bei diesem Prüfkopfträger sind die insgesamt 9 Prüfköpfe 1 - 9 so angeordnet, daß insgesamt drei Schnittpunkte 27,28,29 (Prüforte) gebildet werden, die in unserem Beispiel um den Betrag 30,31 eines Prüfkopfdurchmessers auseinanderliegen. Angestrebt wird, diesen Abstand 30,31 so gering wie möglich zu halten, ohne daß es zu einer störenden Beeinflussung der Schallstrahlen der versetzt angeordneten Prüfköpfe z. B. 5,9 kommt. Der Prüfkopfträger ist dann nicht mehr kreisrund, sondern oval und beansprucht deshalb mehr Platz als der in Figur 4 dargestellte Prüfkopfträger. Der Vorteil dieser Anordnung ist darin zu sehen, daß ein Parallelbetrieb aller Prüfköpfe 1 - 9 möglich ist und dementsprechend die Pulsfolgefrequenz sehr hoch sein kann, was sich vorteilhaft auf die Prüfleistung auswirkt. Das Auseinanderdriften der Prüfköpfe und die Bildung dreier getrennter Schnittpunkte 27,28,29 (Prüforte) wird in Kauf genommen, da der Korrelationsaufwand gering ist im Vergleich zur Anordnung zweier getrennter Prüfkopfträger I, II gemäß Figur 3.

Zur Darstellung der Prüfkopfträger in den Figuren 3,4,5 muß nachdrücklich darauf hingewiesen werden, daß die gewählte Anordnung der Prüfköpfe und deren Zuordnung zu einer bestimmten Prüffunktion nur Beispiele sind. Es ist eine Vielzahl anderer Kombinationen möglich ohne den Schutzbereich der Erfindung zu verlassen.

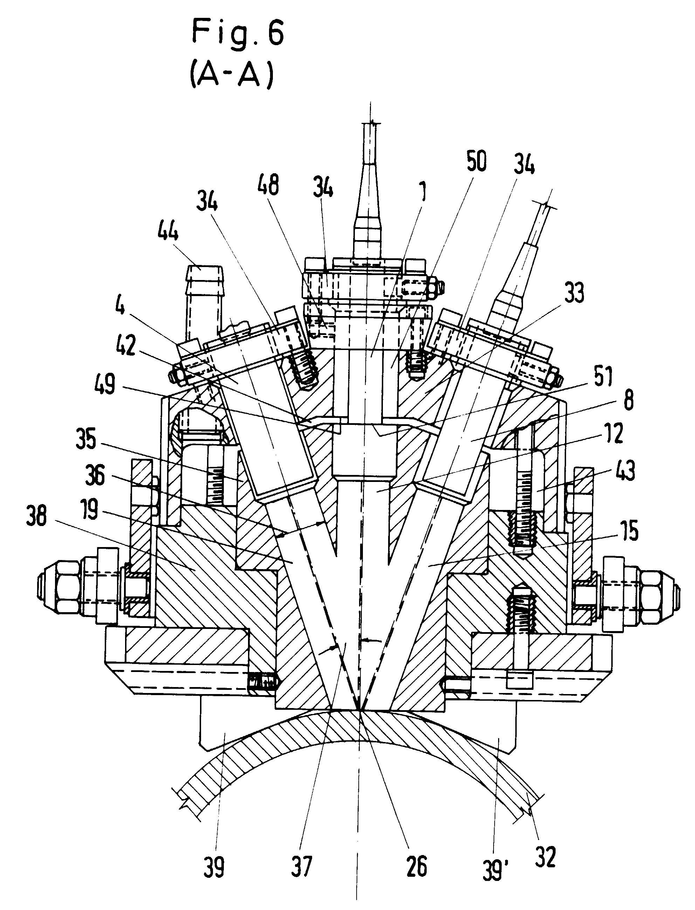

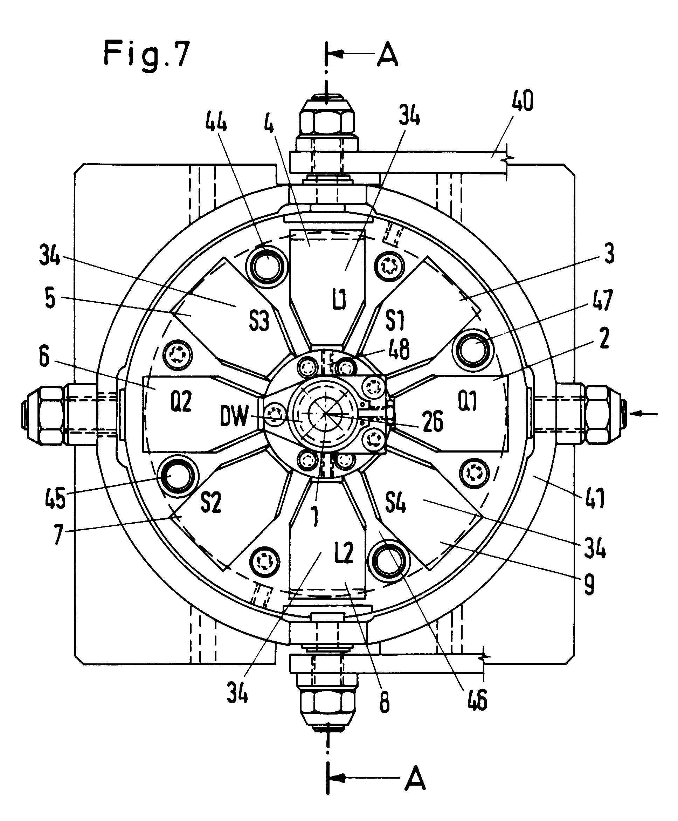

Figur 6 zeigt in einem Schnitt und Figur 7 in einer Draufsicht die erfindungsgemäße Prüfvorrichtung gemäß der in Figur 4 schematisch dargestellten Anordnung. Beispielhaft wird hier ein Rohr 32 in 12-Uhr-Lage geprüft. Durch Drehen des Zeichenblattes kann man auch die Prüfung z. B. in 3- oder 6- oder 9-Uhr-Lage simulieren. Die Prüfvorrichtung besteht aus einem Prüfkopfträger 33, in dem in der schematisch dargestellten Anordung gemäß Fig. 4 insgesamt 9 Prüfköpfe 1 - 9 angeordnet sind. Diese Prüfköpfe 1 - 9 sind über Haltebleche 34 derart im Prüfkopfträger 33 befestigt, daß sie axial unterschiedlich tief fixiert werden können. Außerdem kann in gewissen Grenzen die Achsrichtung der Prüfköpfe 1 - 9 korrigiert werden, so daß die Achsen der Schallstrahlen (hier als gestrichelte Linien angedeutet) genau mit den Achsen (hier als strichpunktierte Linien dargestellt) der Kanäle 12 - 20 fluchten. Erfindungsgemäß ist jedem Prüfkopf 1 - 9 ein das Fließmedium führender Kanal 12 - 20 zugeordnet, wobei in diesem Ausführungsbeispiel die Kanäle 12 - 20 zylindrische Bohrungen sind. Um die Anpassung der Prüfvorrichtung an verschiedene Prüfaufgaben in einfacher Weise realisieren zu können, sind die Kanäle 12 - 20 in einem auswechselbaren Einsatz 35 angeordnet. Damit können sowohl die Querschnittsform, der Durchmesser 36 und die Achsenwinkligkeit 37, die in diesem Beispiel 19 Grad beträgt, variiert werden. Der Einsatz 35 wird gehalten durch eine Buchse 38, die fest mit dem Prüfkopfträger 33 verbunden ist. An der Unterseite der Buchse 38 ist die Führungsmechanik angeordnet, die Im Falle der Rohrprüfung zwei verstellbare prismenartig ausgebildete Sohlen 39,39' aufweist. Im Hinblick auf eine exakte Justierung der Prüfvorrichtung bei der Prüfung von Werkstücken mit gekrümmter Oberfläche ist der Prüfkopfträger 33 mitsamt des daran befestigten Einsatzes 35 und der Buchse 38 kardanisch in einem Rahmengestell 40,41 aufgehängt.

Für eine störungsfreie Führung des Fließmediums ist der Einsatz 35 zum Prüfkopfträger 33 so angeordnet, daß im Verbindungsbereich ein Spalt 42 gebildet wird. Dieser Spalt 42 ist in diesem Ausführungsbeispiel domartig ausgebildet und erstreckt sich über alle Einlaßöffnungen der Kanäle 12 - 20. Im Randzonenbereich erweitere sich der Spalt 42 zu einem Ringraum 43, den die Anschlußkanäle 44 - 47 für die Zufuhr des Fließmediums münden. Am höchsten Punkt des Spaltes 42 oder allgemeiner ausgedrückt in der größten Entfernung von der Werkstückoberfläche, ist ein Entlüftungskanal 48 angeordnet. Um die Prüfvorrichtung für alle Uhr-Lagen universell verwendbar zu machen, sind im Prüfkopfträger 33 weitere Entlüftungsbohrungen (hier nicht dargestellt) angeordnet, die wahlweise geöffnet oder geschlossen werden können. Um eine Luftblasenansammlung im Bereich der Prüfköpfe 1 - 9 möglichst zu vermeiden, werden die Prüfköpfe 1 - 9 im Prüfkopfträger 33 so befestigt, daß die Stirnfläche der Prüfköpfe 1 - 9, hier beispielsweise die 51 des zentral angeordneten Prüfkopfes 1 über die Austrittsfläche 49 der Bohrung 50 hinausragt, mindestens aber bündig damit abschließt. Bei den beiden anderen hier dargestellten Prüfköpfen 4,8 ragt die Stirnfläche sogar weit in den jeweiligen Kanal 15,19 des Einsatzes 35 hinein.

Figur 8 zeigt in einer schematischen Darstellung die Anordnung eines Schalldämpfungskanales 52 mit einem Dämpfungskörper 53. Diese Anordnung hat die Wirkung, daß die möglicherweise zu Störanzeigen führenden Reflexionen bei einer Ausführung mit unsymmetrischer Anordnung der Prüfköpfe vermieden werden. Die Reflexionen entstehen immer dann, wenn durch unpaarig gebohrte Kanäle eine Ecke an der Austrittsstelle im ausweselbaren Einsatz 35 gebildet wird. Dies gilt sowohl für die Ausführung gemäß Figur Figur 3 als auch die gemäß Figur 5.

## Patentansprüche

1. US-Prüfvorrichtung zur zerstörungsfreien Prüfung nach der Impuls-Echo-Methode eines relativ dazu sich bewegenden Werkstückes (10,32) mit Ankoppetung mittels eines Fließmediums zwischen dem Ultraschallschwinger und der Werkstückoberfläche bestehend aus einem Prüfkopfträger (33), an dem mindestens drei Prüfköpfe (1 - 9) angeordnet sind, deren Schallstrahlachsen sich im Bereich des Werkstückes (10,32) schneiden und einer das Fließmedium führenden die Vorlaufstrecke bildenden Kammer (35), die eine der Werkstückoberfläche zugewandte Austrittsöffnung aufweist und mit dem Prüfkopfträger (33) verbunden ist, bei der die Prüfköpfe (1 - 9) eine gemeinsame das Fließmedium führende Kammer (35) aufweisen, und bei der jedem Prüfkopf (1 - 9) eine über eine bestimmte Länge dieser gemeinsamen Kammer (35) sich erstreckende, einen Kanal (12 - 20) bildende separat geführte Vorlaufstrecke zugeordnet ist, deren Achse mit der jeweiligen Schallstrahlachse fluchtet und daß die Rnzahl der Schnittpunkte (27,28,29) der sich schneidenden Schallstrahlen mindestens zwei beträgt und der Abstand (30,31) der Schnittpunkte (27,28,29) der Schallstrahlen so gewählt ist, daß eine störende Beeinflussung der Schallbündel einander gegenüberliegender Prüfköpfe, die für eine Längs-(4,8) oder Schragtehlerprüfung (3,5,7,9) vorgesehen sind, vermieden wird.

2. US-Prüfvorrichtung nach Anspruch 1,
**dadurch gekennzeichnet,**
daß bei Bildung von zwei oder mehr Schnittpunkten (27,28,29) diese auf einer parallel zur Werkstückoberfläche liegenden Geraden liegen.

3. US-Prüfvorrichtung nach den Ansprüchen 1 und 2,
**dadurch gekennzeichnet**,
daß der Abstand (30,31) der Schnittpunkte (27,28,29) der Schallstrahlen in Abhängigkeit von der Schwingergröße, der Frequenz und der sich bildenden Schallfeldkeule im Bereich des (n-l)fachen des Durchmessers der Prüfköpfe (4,8;3,7;5,9) liegt, wobei n die Anzahl der gebildeten Schnittpunkte (27,28,29) ist.

4. US-Prüfvorrichtung nach Anspruch 1,
**dadurch gekennzeichnet**,
daß der Kanal (12-20) einen kreisförmigen Querschnitt aufweist.

5. US-Prüfvorrichtung nach Anspruch 1,
**dadurch gekennzeichnet**,
daß die Achsen der Kanale (12-20) sich auf der Stirnfläche der Pustrittsöffnung der Kammer (35) in mindestens zwei Punkten (26,27,28,29) schneiden.

6. US-Prüfvorrichtung nach Anspruch 1,
**dadurch gekennzeichnet**,
daß der Prüfkopfträger (33) und die Kammer so zueinander angeordnet sind, daß im alle Prüfköpfe (1-9) und Eintrittsöffnungen der Kanäle (12-20) einschließenden Bereich ein nach außen abgedichteter, das Fließmedium führender Spalt (42) gebildet wird und die Austrittsöffnungen symmetrisch verteilt angeordneter Anschlußkanäle (44-47) im Randzonenbereich des Spaltes (42) münden, der mit mindestens einem in der größten Entfernung von der Stirnfläche der Kammer angeordneten Entlüftungskanal (48) verbunden ist.

7. US-Prüfvorrichtung nach Anspruch 6,
**dadurch gekennzeichnet**,
daß im Prüfkopfträger (33) mehrere wahlweise verschließbare Entlüftungsöffnungen angeordnet sind.

8. US-Prüfvorrichtung nach Anspruch 1,
**dadurch gekennzeichnet**,
daß die Kammer als Buchse (38) ausgebildet ist, in der ein mit den das Medium führenden Kanälen (12-20) versehener Einsatz (35) auswechselbar angeordnet ist.

9. US-Prüfvorrichtung nach Anspruch 1,
**dadurch gekennzeichnet**,
daß als gemeinsamer Prüfort die der Prüfvorricntung zugewandte Werkstückoberfläche (11) gewählt wird und für diesen Fall die Achsen der Kanäle (12-20) und die schallstrahlen der Prüfköpfe (1-9) sich in mindestens zwei Punkten (26,27,28,29) schneiden, die genau auf der der Werkstückoberfläche (11) zugewandten Stirnfläche der Kammer liegen.

10. US-Prüfvorrichtung nach Anspruch 1,
**dadurch gekennzeichnet**,
daß als gemeinsamer Prüfort die Rückwand (22) des zu prüfenden WErkstückes (10) gewählt wird und für diesen Fall die Schallstrahle der Prüfköpfe (1-9) unter Beachtung der Brechungsverhältnisse im Werkstück (10) auf der Rückwand (22) und die Achsen der Kanale (12-20) außerhalb der Werkstückbegrenzung sich in mindestens zwei Punkten schneiden.

## Claims

1. An ultrasonic test apparatus for the nondestructive testing according to the pulse echo method of a workpiece (10, 32) moving relative thereto, with contact by means of a flow medium between the ultrasound vibrator and the workpiece surface consisting of a test head carrier (33) on which at least three test heads (1 - 9) are arranged, the sound ray axes of which intersect in the region of the workpiece (10, 32), and a chamber (35) which guides the flow medium and forms the preliminary section, which chamber has an exit opening facing the workpiece surface and is connected to the test head carrier (33), in which the test heads (1 - 9) have a common chamber (35) which guides the flow medium, and in which each test head (1 - 9) is allocated a separately guided preliminary section extending over a certain length of this common chamber (35) and forming a channel (12 - 20), the axis of which preliminary section is flush with the respective sound ray axis, and that the number of intersections (27, 28, 29) of the intersecting sound rays is at least two and the distance (30, 31) of the intersections (27, 28, 29) of the sound rays is selected such that disruptive influencing of the sound beams of test heads lying opposite each other, which are provided for longitudinal (4, 8) or oblique (3, 5, 7, 9) error testing, is avoided.

2. An ultrasonic test apparatus according to Claim 1, characterised in that when two or more intersections (27, 28, 29) are formed they lie on a straight line parallel to the workpiece surface.

3. An ultrasonic test apparatus according to Claims 1 and 2, characterised in that the distance (30, 31) between the intersections (27, 28, 29) of the sound rays lies in the range of (n-1) times the diameter of the test heads (4, 8; 3, 7; 5, 9), dependent on the size of the vibrator, the frequency and the resulting sound field lobe, n being the number of intersections (27, 28, 29) formed.

4. An ultrasonic test apparatus according to Claim 1, characterised in that the channel (12 - 20) has a circular cross-section.

5. An ultrasonic test apparatus according to Claim 1, characterised in that the axes of the channels (12 - 20) intersect on the end face of the exit opening of the chamber (35) at at least two points (26, 27, 28, 29).

6. An ultrasonic test apparatus according to Claim 1, characterised in that the test head carrier (33) and the chamber are arranged relative to each other such that a gap (42) sealed off from the outside which guides the flow medium is formed in the region enclosing all the test heads (1 - 9) and entry openings of the channels (12 - 20), and the exit openings of symmetrically distributed connecting channels (44 - 47) open into the marginal zone region of the gap (42), which is connected to at least one vent channel (48) arranged at the maximum distance from the end face of the chamber.

7. An ultrasonic test apparatus according to Claim 6, characterised in that a plurality of selectively closable vent openings are arranged in the test head carrier (33) .

8. An ultrasonic test apparatus according to Claim 1, characterised in that the chamber is designed as a bush (38) in which an insert (35) provided with channels (12 - 20) guiding the medium is interchangeably arranged.

9. An ultrasonic test apparatus according to Claim 1, characterised in that the workpiece surface (11) facing the testing apparatus is selected as common test site and in this case the axes of the channels (12 - 20) and the sound rays of the test heads (1 - 9) intersect at at least two points (26, 27, 28, 29) which lie exactly on the end face of the chamber facing the workpiece surface (11).

10. An ultrasonic test apparatus according to Claim 1, characterised in that the rear wall (22) of the workpiece (10) to be tested is selected as common test site, and in this case the sound rays of the test heads (1 - 9) intersect on the rear wall (22), taking into account the retraction indices in the workpiece (10), and the axes of the channels (12 - 20) intersect outside the limits of the workpiece at at least two points.

## Revendications

1. Dispositif de test aux ultrasons pour le test non destructif selon la méthode impulsion-écho d'une pièce (10,32) se déplaçant par rapport à celui-ci, avec couplage au moyen d'un milieu fluide entre l'émetteur d'ultrasons et la surface de la pièce, constitué d'un support de têtes de test (33), sur lequel sont agencées au moins trois têtes de test (1-9), dont les axes des rayonnements ultrasonores se coupent dans la zone de la pièce (10,32), et d'une chambre (35) formant l'étendue d'avance guidant le milieu fluide, qui présente une ouverture de sortie en regard la surface de la pièce et est reliée au support de têtes de test (33), dans lequel les têtes de test (1-9) présentent une chambre commune (35) guidant le milieu fluide, et dans lequel, à chaque tête de test (1-9), il est associé une étendue d'avance guidée de façon séparée, formant un canal (12-20), et s'étendant sur une longueur déterminée de cette chambre commune (35), dont l'axe coïncide avec l'axe du rayonnement ultrasonore respectif, et en ce que le nombre des intersections (27,28,29) des rayonnements ultrasonores qui se coupent vaut au moins deux et la distance (30,31) des intersections (27,28,29) des rayonnements ultrasonores est choisie de sorte qu'une influence gênante des faisceaux d'ultrasons de têtes de test opposées l'une à l'autre, qui sont prévues pour un test de défauts obliques (3,5,7,9) ou de défauts longitudinaux (4,8), est évitée.

2. Dispositif de test aux ultrasons selon la revendication 1,
caractérisé en ce que, lors de la formation de deux ou plus intersections (27,28,29), celles-ci se trouvent sur une droite s'étendant parallèlement à la surface de la pièce.

3. Dispositif de test aux ultrasons selon les revendications 1 et 2,
caractérisé en ce que la distance (30,31) des intersections (27,28,29) des rayonnements ultrasonores, de façon dépendant de la taille de l'émetteur, de la fréquence et du lobe de champ ultrasonore qui se forme, se trouve dans la plage de (n-1) fois le diamètre des têtes de test (4,8;3,7;5,9), n étant le nombre des intersections formées (27,28,29).

4. Dispositif de test aux ultrasons selon la revendication 1,
caractérisé en ce que le canal (12-20) présente une section transversale circulaire.

5. Dispositif de test aux ultrasons selon la revendication 1,
caractérisé en ce que les axes des canaux (12-20) se coupent sur la face frontale de l'ouverture de sortie de la chambre (35) en au moins deux points (26,27,28,29).

6. Dispositif de test aux ultrasons selon la revendication 1, caractérisé en ce que le support de têtes de test (33) et la
chambre sont agencés réciproquement de sorte que, dans la zone incluant toutes les têtes de test (1-9) et les ouvertures d'entrée des canaux (12-20), il est formé une fente (42) étanchéifiée vers l'extérieur guidant le milieu fluide, et les ouvertures de sortie de canaux de raccordement (44-47) agencés de façon symétriquement répartie débouchent dans la zone marginale de la fente (42) qui est reliée à au moins un canal d'évent (48) agencé le plus loin possible de la face frontale de la chambre.

7. Dispositif de test aux ultrasons selon la revendication 6,
caractérisé en ce que plusieurs ouvertures d'évent pouvant être fermées au choix sont agencées dans le support de têtes de test (33).

8. Dispositif de test aux ultrasons selon la revendication 1,
caractérisé en ce que la chambre est réalisée sous forme de manchon (38) dans lequel est agencée, de façon interchangeable, une pièce (35) munie des canaux (12-20) guidant le fluide.

9. Dispositif de test aux ultrasons selon la revendication 1,
caractérisé en ce que, comme lieu commun de test, la surface (11) de la pièce en regard du dispositif de test est choisie et, dans ce cas, les axes des canaux (10-20) et les rayonnements ultrasonores des têtes de test (1-9) se coupent en au moins deux points (26,27,28,29), qui se trouvent précisément sur la face frontale, en regard de la surface (11) de la pièce, de la chambre.

10. Dispositif de test aux ultrasons selon la revendication 1,
caractérisé en ce que, comme lieu commun de test, la paroi arrière (22) de la pièce (10) à tester est choisie et, dans ce cas, les rayonnements ultrasonores des têtes de test (1-9), en tenant compte des coefficients de réfraction dans la pièce (10), se coupent sur la paroi arrière (22) et les axes des canaux (12-20) se coupent en au moins deux points à l'extérieur de la limite de la pièce.
